# EUROPÄISCHE PATENTSCHRIFT

(11) **EP 3 808 230 B1**
(45) Veröffentlichungstag und Bekanntmachung des Hinweises auf die Patenterteilung: **15.06.2022**
(21) Anmeldenummer: 20201110.2
(22) Anmeldetag: 09.10.2020
(51) Int. Cl.: A47J 31/41, A47J 31/60, B67D 1/07

(54) **VORRICHTUNG ZUR AUSGABE VON FLÜSSIGEN AROMAZUSÄTZEN FÜR AROMATISIERTE GETRÄNKE**
LIQUID FLAVOURING ADDITIVE DISPENSING APPARATUS FOR FLAVOURED BEVERAGES
DISPOSITIF DE DISTRIBUTION D'ADDITIFS AROMATIQUES LIQUIDES POUR BOISSONS AROMATIQUES

(30) Priorität: 17.10.2019 DE 102019128128
(43) Veröffentlichungstag der Anmeldung: 21.04.2021
(73) Patentinhaber: FRANKE Kaffeemaschinen AG, 4663 Aarburg (CH)
(72) Erfinder: WENIGER, Stefan Remo, 5037 Muhen (CH)
(74) Vertreter: Lemcke, Brommer & Partner Patentanwälte Partnerschaft mbB

(56) Entgegenhaltungen:
- EP-A1- 1 797 801
- CH-A1- 709 187
- DE-A1-102015 217 964
- US-A- 4 753 372
- US-B1- 7 293 675

## Beschreibung

Die vorliegende Erfindung betrifft eine Vorrichtung zur Ausgabe von flüssigen Aromazusätzen nach dem Oberbegriff des Anspruchs 1. Außerdem betrifft die Erfindung ein Verfahren zum Betrieb einer solchen Vorrichtung.

Aus der US 4753372 ist eine Reinigungsvorrichtung für einen Getränkeausgabeautomaten bekannt, der Getränke aus luftdichten Bag-in-Box-Verpackungen ansaugt. Die Vorrichtung besitzt einen Verteiler, auf den die Ansaugschläuche des Getränkeausgabeautomaten zur Reinigung aufgesteckt und darüber mit Wasser oder Reinigungsflüssigkeit gespült werden können.

Bei der Zubereitung aromatisierter Getränke, insbesondere Kaffee, ist es bekannt, dass dem Getränk als besondere Variante Aromastoffe in Sirupform zugesetzt werden können. Bei bekannten Kaffeevollautomaten erfolgt die Ausgabe derartiger Aromazusätze meist über einen als Beistellgerät ausgebildeten Aromastoffdosierer. Eine Aromastoffdosiereinrichtung ist zum Beispiel in der EP 2 030 538 A2 beschrieben. Dort sind unterschiedliche Aromastoffbehälter für sirupförmige Aromastoffe unterschiedlicher Geschmacksrichtungen vorgesehen. Jeder Aromastoffbehälter ist mit einer zugehörigen Pumpe verbunden, von der jeweils eine separate Aromastoffleitung zu dem Getränkeauslasskopf eines Kaffeevollautomaten führt.

Der Betrieb einer solchen Aromastoffdosiereinrichtung erfordert regelmäßige Reinigung. Bei am Markt bekannten Geräten erfolgt diese Reinigung manuell. Hierzu werden die Ansaugschläuche aus den Aromastoffbehältern herausgenommen und in ein Gefäß mit einer speziellen Reinigungsmittellösung eingetaucht. Anschließend können die Dosierpumpen in Betrieb genommen und so die Reinigungsmittellösung durch die Vorrichtung gefördert werden. Anschließend muss mit klarem Wasser nachgespült werden. Im professionellen Einsatz solcher Geräte ist die Durchführung einer solchen Reinigung aufwendig, wird oft nur unregelmäßig durchgeführt und ist anfällig für die Bedienfehler.

Die vorliegende Erfindung hat sich daher zur Aufgabe gesetzt, eine Aromastoffausgabevorrichtung anzugeben, bei der die regelmäßige Reinigung vereinfacht durchgeführt werden kann.

Die Aufgabe wird gelöst durch die Merkmale des Anspruchs 1. Außerdem wird an Anspruch 7 ein Verfahren zum Betrieb einer solchen Vorrichtung angegeben.

Bei einer Vorrichtung der eingangs genannten Art ist vorgesehen, dass die Ansaugleitungen an ihrem mit dem Aromastoffbehälter zu verbindenden Ende jeweils ein Anschlussstück aufweisen und die Vorrichtung eine Anschlusseinrichtung umfasst, welche entsprechende Anschlussgegenstücke für die Ansaugleitungen besitzt, mit denen die Ansaugleitungen zur Durchführung einer Reinigung statt mit dem jeweiligen Aromastoffbehälter verbunden werden können, und die Anschlusseinrichtung außerdem einen mit den Anschlussgegenstücken verbundenen Anschluss für eine Reinigungsmittelzuleitung aufweist.

Es ist also zunächst einmal vorgesehen, dass die von den Pumpen zu den Aromastoffbehältern führenden Ansaugleitungen mit einem Anschlussstück versehen werden. Dieses wird mit einem entsprechenden Anschlussgegenstück am betreffenden Aromastoffbehälter verbunden. Ein solches Anschlussstück kann eine Steck- oder Schraubkupplung sein, die mit einem entsprechenden Nippel am Aromastoffbehälter verbunden werden kann. Die Ansaugleitungen können somit von den Aromastoffbehältern leicht und ohne das Aromastoff vertropft würde, entfernt werden.

Außerdem ist an der Vorrichtung die genannte Anschlusseinrichtung vorgesehen, an der ebenfalls entsprechende Anschlussgegenstücke für die Ansaugleitungen angeordnet sind. Die Anschlusseinrichtung ist mit einer Reinigungsmittelzuleitung verbunden, sodass, wenn die Ansaugleitungen von den Aromastoffbehältern abgenommen und mit der Anschlusseinrichtung verbunden wurden, durch sequentielles Aktivieren der Pumpen ein automatischer Reinigungsvorgang gestartet und durchgeführt werden kann.

Erfindungsgemäß sind zwischen der Reinigungsmittelzuleitung und den Anschlussgegenstücken der Anschlusseinrichtung Rückschlagventile angeordnet. Diese verhindern nicht nur, dass über die anderen Anschlüssen Luft oder Aromastofffluid angesaugt wird, sondern verhindern aufgrund der Federkraft, mit der ein Schließelement der Rückschlagventile in Schließstellung gehalten wird, ein Auslaufen von Reinigungsmittellösung aus der drucklosen Reinigungsmittelzuleitung an den Anschlussgegenstücken.

Zweckmäßigerweise sind die Pumpen als Schlauchpumpen ausgeführt. Schlauchpumpen werden häufig auch als Schlauchquetschpumpen oder Peristaltikpumpen bezeichnet. Bei dieser Pumpenart kommt der empfindliche Pumpmechanismus nicht in Kontakt mit dem sirupförmigen Fluid, welches durch die Aromastoffleitungen gefördert wird. Dieser Pumpentyp erlaubt außerdem eine genaue Dosierung in Abhängigkeit der Umdrehungen des Pumpenrotors. Durch Umkehren der Drehrichtung des Rotors kann darüber hinaus das Fluid auch in Gegenrichtung zurück in den betreffenden Aromastoffbehälter gefördert werden. Schließlich ist in jeder Drehstellung sichergestellt, dass bei stehendem Pumpenrotor die Fluidleitung abgeschlossen ist, sodass kein Aromastoff auslaufen bzw. heraustropfen kann.

Vorzugsweise ist zumindest ein Teil der Anschlussstücke als selbstschließende Schnellverschlusskupplungen ausgeführt. Bei einer solchen Selbstschlusskupplung schließt ein in der Kupplung verbautes Ventil, wenn die Kupplung von ihrem Gegenstück abgenommen wird, sodass ein Heraustropfen von Fluid aus der Ansaugleitung verhindert wird. Bei aufgesetztem Anschlussstück hält dagegen das Anschlussgegenstück das Ventil in Offenstellung.

Im Rahmen der Erfindung kann außerdem vorgesehen sein, dass zumindest ein Teil der Aromastoffbehälter in herkömmlicher Weise als Flaschen mit einem Flaschenhals ausgebildet sind. In diesem Fall ist je Aromastoffbehälter ein in den Flaschenhals einführbarer Verschlussstopfen vorgesehen, der an seinem oberen Ende ein Anschlussgegenstück für die zugehörige Ansaugleitung trägt und eine durch den Verschlussstopfen mit dem Anschlussgegenstück verbundene, in die Flasche ragende Schlauch- oder Rohrleitung aufweist. Der Verschlussstopfen mit der in die Flasche ragenden Schlauch- oder Rohrleitung verbleibt auf der Flasche, während zur Durchführung einer Reinigung das Anschlussstück des Ansaugschlauches vom Verschlussstopfen abgenommen und auf die Anschlusseinrichtung aufgesetzt werden kann.

Neben Aromastoffbehältern in Flaschenform sind auch andere Behältertypen, wie etwa Kunststoffkanister oder sogenannte Bag-in-Box-Verpackungen geeignet und im Rahmen der vorliegenden Erfindung verwendbar. Eine Bag-in-Box-Verpackung besteht aus einem Innenbeutel aus einem Folienverbundmaterial, der mechanisch durch eine Umverpackung aus Karton geschützt wird. Bei einem Kunststoffcontainer kann in ähnlicher Weise vorgegangen werden, wie bei einer Flasche, indem ein entsprechender Verschluss mit Anschlussgegenstück und in den Container ragendem Anschlussschlauch verwendet wird. Bei Bag-in-Box-Verpackungen ist es zweckmäßig, an dem Innenbeutel der Verpackung einen entsprechenden Anschluss mit Anschlussgegenstück vorzusehen.

Darüber hinaus betrifft die Erfindung eine Anordnung mit einer Vorrichtung der vorstehend genannten Art und einer an den Reinigungsmittelanschluss der Anschlusseinrichtung über eine Reinigungsmittelzuleitung angeschlossenen Reinigungsvorrichtung, welche die Vorrichtung zur Durchführung eines Reinigungsvorgangs mit Reinigungsflüssigkeit versorgt. Als Reinigungsflüssigkeit dient zweckmäßigerweise eine Reinigungsmittellösung, mit der die Pumpen und Leitungen der Vorrichtung durchgespült werden. Die Anschlusseinrichtung ist zweckmäßigerweise ausgebildet, im Anschluss an einen Durchlauf mit Reinigungsmittellösung klares Wasser zum Nachspülen bereitzustellen. Der Reinigungsvorgang selbst verläuft durch schrittweise Inbetriebnahme der einzelnen Pumpen, welche über die Anschlusseinrichtung und die daran angeschlossenen Ansaugschläuche Reinigungsflüssigkeit aus der Reinigungsvorrichtung ansaugen und fördern.

Bei einer bevorzugten Ausführungsform besitzt die Reinigungsvorrichtung einen Reinigungsmittelvorratsbehälter mit Reinigerkonzentrat, einem Mischbehälter zum Anmischen einer Reinigungsflüssigkeit aus Reinigerkonzentrat und Wasser, einen über ein Absperrventil mit dem Mischbehälter verbindbaren Wasserzulauf, eine Dosierpumpe zum Fördern von Reinigerkonzentrat aus dem Reinigungsmittelvorratsbehälter in den Mischbehälter, sowie einen mit dem Mischbehälter verbundenen Auslassanschluss, an dem die Reinigungsmittelzuleitung der Anschlussvorrichtung angeschlossen ist. Somit kann mithilfe der Dosierpumpe aus dem in der Reinigungsvorrichtung bevorrateten Reinigerkonzentrat und Wasser, insbesondere Warmwasser, eine Reinigungsmittellösung vorgegebener Konzentration angemischt werden, welche dann an dem Auslassanschluss bereitsteht. Da die Dosierung und Bereitstellung der Reinigungsflüssigkeit sowie ein anschließendes Nachspülen automatisiert erfolgen, ist eine Fehlbedingung weitgehend ausgeschlossen.

Die Steuerung des Reinigungsdurchlaufs kann zweckmäßigerweise von einer Steuerungseinheit einer angeschlossenen Getränkeausgabevorrichtung übernommen werden, die über entsprechende Steuerschnittstellen mit der Aromastoffdosiervorrichtung und der Reinigungsvorrichtung verbunden ist. Alternativ oder kumulativ können entsprechende Steuerschaltungen auch in der Aromastoffdosiervorrichtung oder der Reinigungsvorrichtung verbaut sein.

Vorzugsweise besitzt die Reinigungsvorrichtung mindestens einen Durchflussmesser zur Bestimmung der Menge an in den Mischbehälter geförderten Reinigerkonzentrats und/oder Wassers. Weiter ist es vorteilhaft, wenn Wasserzulauf und Dosierpumpe über Schaltmittel schaltbar mit einer Zuleitung zum Mischbehälter verbindbar sind, in der sich der Durchflussmesser befindet. Dieser kann somit sowohl zur Dosierung der Reinigerkonzentrats als auch der Wassermenge dienen. Des Weiteren kann ein zweiter Durchflussmesser in der Auslassleitung des Mischbehälters vorgesehen sein, mit dem die Menge pro Reinigungszyklus abgegebener Reinigungsmittellösung bestimmt und dosiert werden kann.

Schließlich betrifft die Erfindung ein Verfahren zum Betrieb einer Vorrichtung zur Ausgabe von flüssigen Aromazusätzen bei der Zubereitung von aromatisierten Getränken, insbesondere von Kaffee-, Tee- und/oder milchbasierten Getränken, bei der mehrere Aromastoffbehälter für verschiedene Aromazusätze vorgesehen sind und jeder der Aromastoffbehälter über eine flexible Ansaugleitung mit einer dem jeweiligen Aromastoffbehälter zugeordneten Pumpe verbunden wird, und bei dem durch Ansteuern einer der Pumpen der zugehörige Aromazusatz über eine Aromastoffleitung zu einer angeschlossenen Getränkeausgabevorrichtung gefördert wird. Hierbei ist erfindungsgemäß vorgesehen, dass die Ansaugleitungen an ihren mit dem Aromastoffbehälter zu verbindenden Ende jeweils ein Anschlussstück aufweisen und zur Durchführung einer Reinigung die Ansaugleitungen von ihren jeweiligen Aromastoffbehältern abgenommen und über eine Anschlusseinrichtung, an der entsprechende Anschlussgegenstücke für die Ansaugleitungen vorgesehen sind, mit einer Reinigungsmittelzuleitung verbunden werden.

Insbesondere ist es zweckmäßig, vor Durchführung einer Reinigung in den Leitungen befindliches Aromafluid in den jeweiligen Aromastoffbehälter zurückzufördern, indem die betreffende Pumpe in entgegengesetzter Drehrichtung betrieben wird. Die Leitungen können somit vor Durchführung einer Reinigung mithilfe der Pumpe weitgehend entleert werden.

Weitere Vorteile und Eigenschaften der Erfindung ergeben sich aus der nachfolgenden Beschreibung eines Ausführungsbeispiels anhand der Figuren. Es zeigen
- Figur 1: ein Fluidschema einer Aromastoffdosiervorrichtung mit angeschlossener Reinigungsvorrichtung,
- Figur 2: eine vergrößerte Darstellung einer an der Aromastoffdosiervorrich-tung vorgesehenen Anschlusseinrichtung,
- Figur 3: eine Frontansicht einer mit Aromastoffbehältern bestückten Aro-mastoffdosiervorrichtung,
- Figur 4: eine Seitenansicht der Vorrichtung aus Figur 2,
- Figur 5a: einen Stopfen mit aufgesetztem Anschlussteil zum Anschluss einer Ansaugleitung,
- Figur 5b: den Stopfen aus Figur 5a mit abgezogenem Anschlussteil,
- Figur 6: eine Schnittansicht des Stopfens und Anschlussteils aus Figur 5a, und
- Figur 7: eine vergrößerte Ansicht der an die Aromastoffdosiervorrichtung aus Figur 1 angeschlossenen Reinigungsvorrichtung.

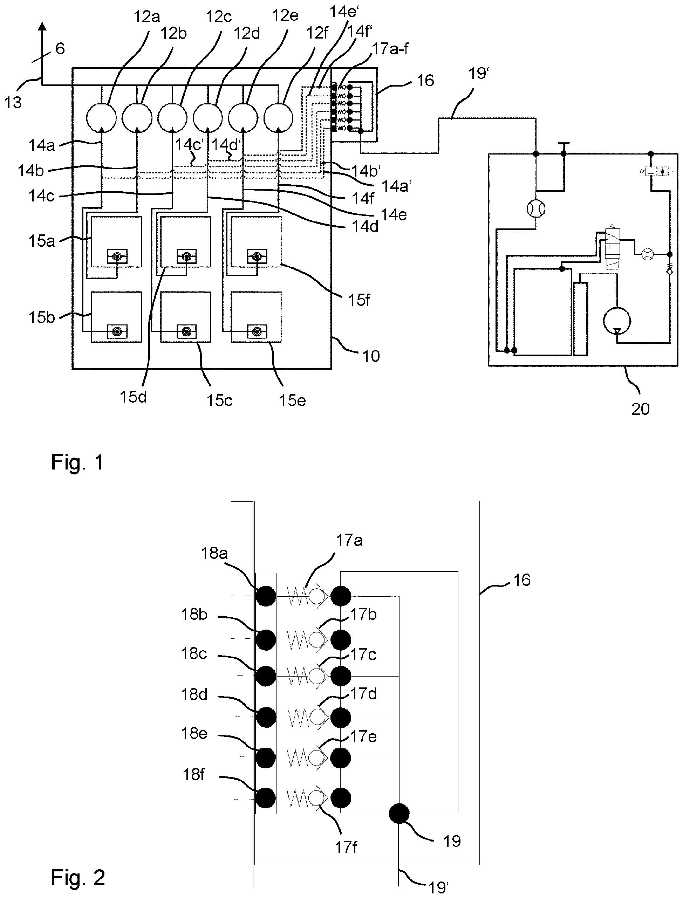

In Figur 1 ist in Form eines Fluiddiagramms, eines sogenannten Wasserlaufschemas, eine Aromastoffdosiervorrichtung 10 gezeigt, die auch als Sirupdosierer bezeichnet wird. Die Vorrichtung 10 besitzt insgesamt sechs als Schlauchpumpen ausgebildete Pumpen 12a - 12f. Dementsprechend kann die Vorrichtung insgesamt sechs unterschiedliche Aromazusätze ausgeben. In erster Linie sind dies sirupförmige Aromazusätze unterschiedlicher Geschmacksrichtungen, etwa Vanille, Schokolade, Karamell, Amaretto, Haselnuss, Pistazie etc. Daneben können jedoch auch verschiedene Spirituosen als Aromazusätze verwendet werden, etwa Liköre oder Schnäpse.

Eine Schlauchpumpe ist eine Verdrängerpumpe, bei der das zu fördernde Medium durch äußere mechanische Verformung eines Schlauches durch diesen hindurchgedrückt wird. Der Schlauch stützt sich jeweils außen am Gehäuse eines Pumpenkopfes ab und wird von innen durch Rollen oder Gleitschuhe abgeklemmt, die sich an einem Rotor drehen (radiales Wirksystem) oder über eine Nockenwelle bewegt werden (lineares oder auch horizontales Wirksystem). Bei beiden Bauarten führt die Bewegung dazu, dass sich die Abklemmstelle entlang des Schlauches bewegt und dadurch das Fördermedium vorantreibt. Der Ansaugunterdruck wird durch die Elastizität des Schlauchmaterials erzeugt.

Jede der Pumpen 12a - 12f ist über einen Ansaugschlauch 14a - 14f mit einem zugeordneten Aromastoffbehälter 15a - 15f verbunden. Von den Pumpen 12a - 12f führen Aromastoffleitungen zu einer Getränkeausgabevorrichtung, wo sie an einem Getränkeauslasskopf an entsprechenden Aromastoffdüsen enden. In Figur 1 sind die Aromastoffleitungen der Einfachheit halber als eine gemeinsame Verbindung 13 dargestellt. Um eine Vermischung der unterschiedlichen Aromazusätze zu vermeiden, ist es jedoch zweckmäßig, hier sechs separate Leitungen vorzusehen.

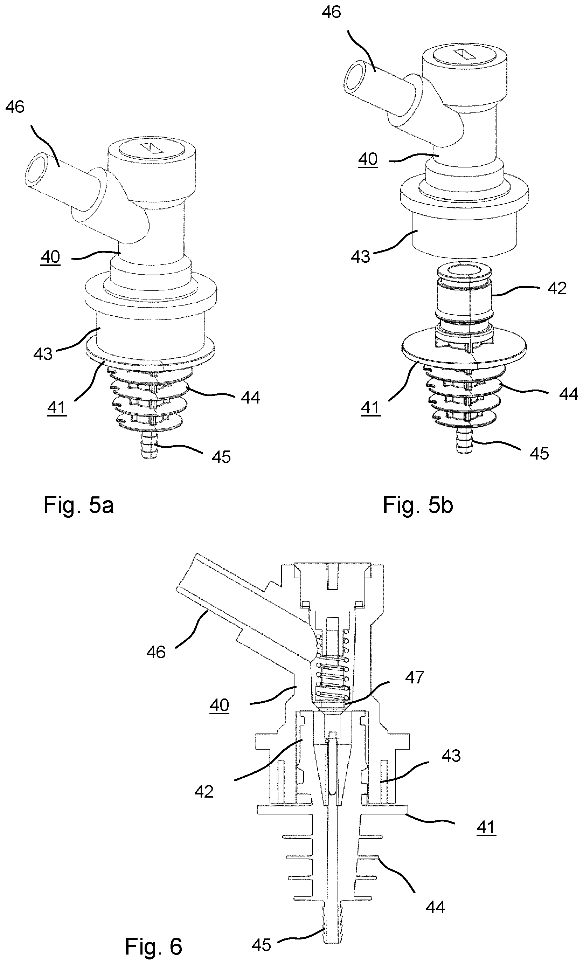

Die Ansaugleitungen 14a - 14f sind jeweils an ihrem mit dem zugehörigen Aromastoffbehälter 15a - 15f zu verbindenden Ende mit einem Anschlussstück 40 in Form einer Schlauchkupplung mit Schnellverschluss versehen. Eine solche Schlauchkupplung ist in den Figuren 5a, 5b und 6 näher dargestellt. Die Aromastoffbehälter 15a - 15f sind mit entsprechenden Anschlussgegenstücken in Form korrespondierender Stecknippel versehen. Die Anschlussschläuche 14a - 14f können somit von den betreffenden Aromastoffbehältern 15a - 15f leicht abgenommen werden.

An der Aromastoffdosiervorrichtung 10 ist darüber hinaus eine Anschlusseinrichtung 16 angeordnet, die auch als Anschlussbox bezeichnet wird. Eine vergrößerte Darstellung der Anschlusseinrichtung ist in Figur 2 gezeigt. Die Anschlussbox 16 besitzt sechs Anschlussgegenstücke 18a - 18f für die Ansaugleitungen 14a - 14f. Dementsprechend können die Ansaugleitungen 14a - 14f von ihren Aromastoffbehältern 15a - 15f abgenommen und auf die Anschlussgegenstücke 18a - 18f der Anschlussbox 16 aufgesteckt werden. Diese Position ist in Figur 1 durch gestrichelte Verbindungslinien 14a' bis 14f' dargestellt. Die Anschlussgegenstücke 18a - 18f sind jeweils über ein Rückschlagventil 17a - 17f mit einem gemeinsamen Anschluss 19 verbunden, an dem eine Reinigungsmittelzuleitung 19' angeschlossen ist, die von einer Reinigungsvorrichtung 20 kommt.

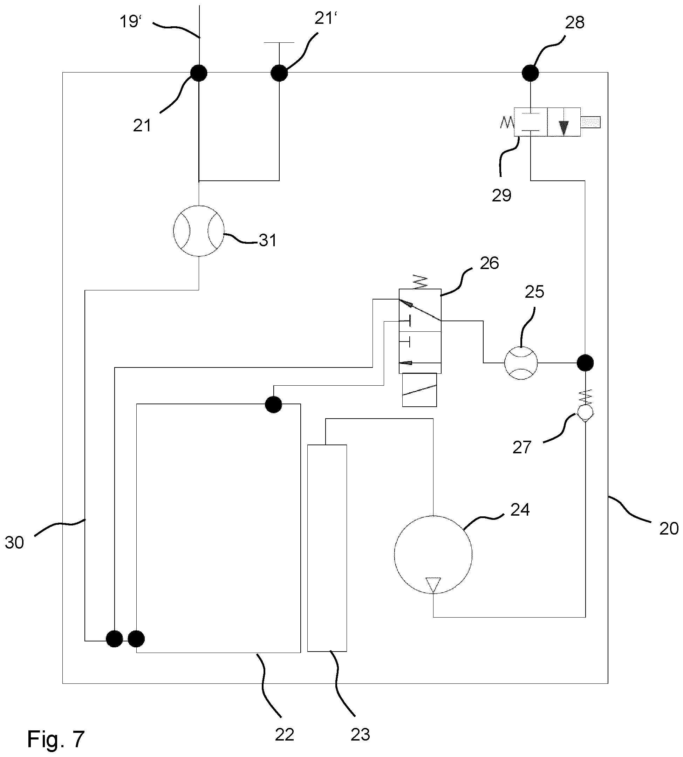

Über die Reinigungsmittelzuleitung 19' wird zur Durchführung eines Reinigungsvorgangs der Aromastoffdosiervorrichtung 10 eine Reinigungsmittellösung bereitgestellt. Zur Durchführung des Reinigungsvorgangs werden somit die Ansaugleitungen 14a - 14f auf die Anschlussbox 16 aufgesteckt. Über die Reinigungsvorrichtung 20, die nachfolgend anhand von Figur 7 näher erläutert wird, wird Reinigungsmittellösung bereitgestellt. Die Pumpen 12a - 12f werden nacheinander der Reihe nach aktiviert, sodass die Reinigungsmittellösung durch die Ansaugleitung 14a - 14f, die jeweilige Pumpe 12a - 12f und die Aromastoffleitungen 13 gefördert wird. Unter dem Getränkeauslasskopf der angeschlossenen Getränkeausgabevorrichtung wird ein Auffangbehälter positioniert, in dem die Reinigungsmittellösung aufgefangen wird. Anschließend wird von der Reinigungsvorrichtung 20 warmes Wasser zum Nachspülen bereitgestellt. Die Pumpen 12a - 12f werden nochmals aktiviert, um diese jeweils mit klarem Wasser nachzuspülen. Anschließend ist der Reinigungsvorgang beendet und die Ansaugleitungen 14a - 14f können wieder mit den Aromastoffbehältern 15a - 15f verbunden werden.

Da die Pumpen 12a - 12f wie erläutert der Reihe nach nacheinander aktiviert werden, verhindern die Rückschlagventile 17a - 17f insbesondere, dass über einen der anderen Anschlüsse Luft oder Fluid angesaugt werden kann. Darüber hinaus halten die Rückschlagventile 17a - 17f aufgrund ihrer drucklos unter Federkraft in Schließstellung gehaltener Schließelemente die Reinigungsmittelzuleitungen 19' geschlossen, sodass zu den Anschlussgegenstücken 18a - 18f kein Reinigungsmittel heraustropfen kann.

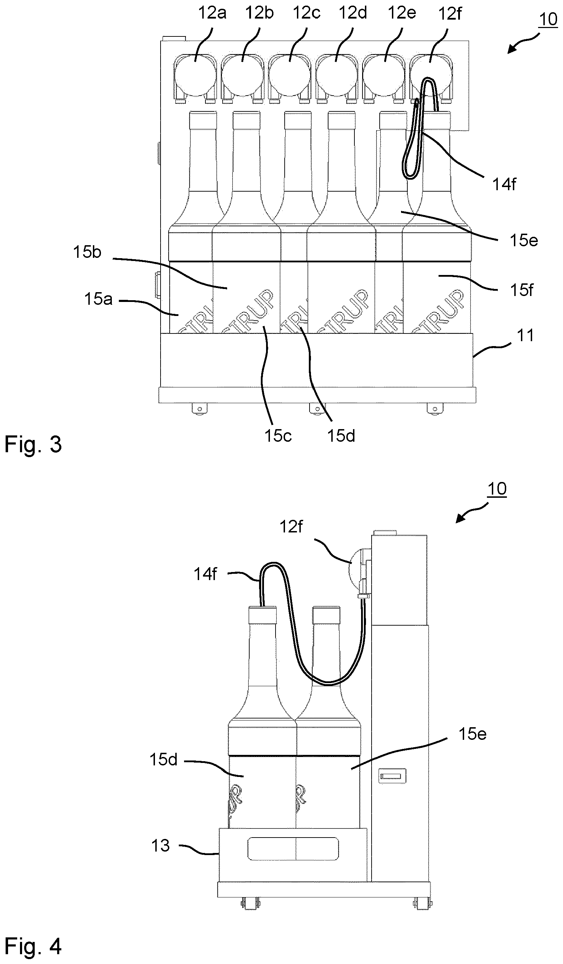

In den Figuren 3 und 4 ist eine Ansicht der Aromastoffdosiervorrichtung 10 gezeigt. In einem oberen Bereich befinden sich die sechs Schlauchpumpen 12a - 12f. Ein Aufnahmeraum in Form einer Schublade 11 bietet Platz für sechs als Flaschen ausgeführte Aromastoffbehälter 15a - 15f. Von den Schlauchpumpen 12a - 12f führt jeweils ein Ansaugschlauch zu einer der Flaschen 15a - 15f. Der Übersichtlichkeit halber ist hier lediglich ein Ansaugschlauch 14f dargestellt. Die übrigen sind in der Figur weggelassen, werden jedoch im Betrieb der Vorrichtung in entsprechender Weise angeordnet. Von der Rückseite der Vorrichtung führen hier nicht dargestellte Aromastoffleitungen zu einer angeschlossenen Getränkeausgabevorrichtung.

Der in den Figuren 3 und 4 gezeigte Ansaugschlauch 14f mündet in die Flasche 15f und ragt hierbei in herkömmlicher Weise lediglich in die Flasche hinein. In den Figuren 5a, 5b und 6 sind Verschlussstopfen und Anschlussstücke für die Ansaugschläuche 14a - 14f gezeigt, die im Rahmen der vorliegenden Erfindung zum Einsatz kommen. Das Anschlussstück 40 wird hierbei mit dem Verschlussstopfen 41 zusammengesteckt. Hierzu besitzt der Verschlussstopfen 41 an seinem oberen Ende einen als Anschlussgegenstück dienenden Nippel 42. Der untere Bereich des Verschlussstopfens 41 ist mit flexiblen Dichtlamellen 44 versehen und wird dichtend in den Flaschenhals der Aromastoffflaschen eingesteckt. An seinem unteren Ende ist ein Schlauchnippel 45 angebracht, auf den ein innerhalb der Aromastoffflasche angeordneter, zu deren Boden führender Schlauch aufgesteckt wird. Verschlussstopfen 41 und der daran befestigte Schlauch verbleiben in der Flasche. Das Anschlussstück 40 ist mit einer Stecckupplung 43 versehen, die auf den Nippel 42 des Verschlussstopfens 41 aufgesteckt wird. An dem Anschlussstück 40 ist außerdem ein Schlauchnippel 46 angebracht, auf den der Ansaugschlauch 14f aufgesteckt wird. Außerdem ist das Anschlussstück 40 mit einem Schnellverschlussventil 47 versehen, dessen Schließelement in aufgestecktem Zustand durch den Nippel 42 in Offenstellung gehalten wird und unter Federkraft beim Abziehen des Anschlussstücks 40 selbsttätig schließt. Somit wird verhindert, dass in der Ansaugleitung 14f befindliches Aromastofffluid heraustropfen kann.

Schließlich ist in Figur 7 eine vergrößerte Darstellung der Reinigungsvorrichtung 20 gezeigt, mit der ein Reinigungsdurchlauf der Aromastoffdosiervorrichtung 10 durchgeführt werden kann. Über die Reinigungsmittelzuleitung 19' ist die Reinigungsvorrichtung 20 wie in Figur 1 gezeigt an den Reinigungsmittelanschluss 19 der Anschlussbox 16 angeschlossen. Die Reinigungsvorrichtung 20 umfasst einen Mischbehälter 22, in dem Reinigungsmittellösung angemischt wird. Zu diesem Zweck wird aus einem Reinigungsmittelbehälter 23 Reinigerkonzentrat in den Mischbehälter 22 gefördert. Hierzu dient eine an den Reinigungsmittelbehälter 23 angeschlossene Dosierpumpe 24 sowie ein Durchflussmesser 25, mit dem die geförderte Konzentratmenge gemessen und dosiert werden kann. Außerdem kann der Durchflussmesser 25 als Leermeldesensor für das Reinigerkonzentrat dienen.

Hinter dem Durchflussmesser 25 befindet sich ein Umschaltventil 26, welches zum Einfüllen von Reinigerkonzentrat in den Mischbehälter 22 in die untere, in Figur 7 nicht gezeigte Schaltstellung gebracht wird. Anschließend wird das Umschaltventil 26 in seine obere, in Figur 7 gezeigte Schaltstellung gebracht. In dieser Schaltstellung kann Warmwasser vom Warmwasseranschluss 28 über das zu diesem Zweck geöffnete Ventil 29 in den Mischbehälter 22 eingefüllt werden. Über den Durchflussmesser 25 kann wiederum die Menge an zugefülltem Warmwasser gemessen und dosiert werden, sodass in dem Mischbehälter 22 eine Reinigungsmittellösung ("Flotte") vorgegebener Konzentration angemischt werden kann. Ein Rückschlagventil 27 zwischen Dosierpumpe 24 und Durchflussmesser 25 verhindert, dass bei geöffnetem Ventil 29 Wasser in Richtung des Reinigungsmittelbehälters 23 strömen kann.

Nachdem die Reinigungsmittellösung in dem Mischbehälter 22 angemischt wurde, ist die Reinigungsvorrichtung 20 betriebsbereit und kann über die am Reinigungsmittelauslass 21 angeschlossene Reinigungsmittelzuleitung 19' die Reinigungsmittellösung bereitstellen. Über eine Entnahmeleitung 30 und einen zweiten Durchflussmesser 31 ist der Mischbehälter 22 mit dem Reinigungsmittelauslass 21 verbunden. Über die Anschlussbox 16 kann von den Schlauchpumpen 12a - 12f somit Reinigungsmittellösung aus dem Mischbehälter 22 angesaugt werden. Mit Hilfe des Durchflussmessers 31 wird die für eine gründliche Reinigung vorgegebene Menge an Reinigungsmittellösung bestimmt. Anschließend ist jeweils die nächste Schlauchpumpe an der Reihe und wird zur Durchführung des Reinigungsvorgangs aktiviert. Nachdem alle sechs Schlauchpumpen 12a - 12f mit Reinigungsmittellösung gereinigt wurden, wird nochmals mit Warmwasser aus dem Warmwasseranschluss 28 nachgespült, indem das Ventil 29 geöffnet und das Umschaltventil 66 in seine obere Schaltstellung gebracht wird.

## Patentansprüche

1. Vorrichtung (10) zur Ausgabe von flüssigen Aromazusätzen bei einer Zubereitung von aromatisierten Getränken, insbesondere von kaffee-, tee- und/oder milchbasierten Getränken, mit einem Aufnahmeraum (11) zur Aufnahme von mehreren Aromastoffbehältern (15a - 15f), mit mehreren, je einem der Aromastoffbehälter (15a - 15f) zugeordneten Pumpen (12a - 12f), die über jeweils eine flexible Ansaugleitung (14a - 14f) mit dem betreffenden Aromastoffbehälter (15a - 15f) verbindbar sind, und mit mindestens einer von den Pumpen (12a - 12f) zu einer Getränkeausgabevorrichtung führenden Aromastoffleitung (13)
wobei die Ansaugleitungen (14a - 14f) an ihrem mit dem Aromastoffbehälter (15a - 15f) zu verbindenden Ende jeweils ein Anschlussstück (40) aufweisen und die Vorrichtung (10) eine Anschlusseinrichtung (16) umfasst, welche entsprechende Anschlussgegenstücke (18a - 18f) für die Ansaugleitungen (14a - 14f) besitzt, mit denen die Ansaugleitungen (14a - 14f) zur Durchführung einer Reinigung statt mit dem jeweiligen Aromastoffbehälter (15a - 15f) verbunden werden können und die Anschlusseinrichtung (16) außerdem einen mit den Anschlussgegenstücken (18a - 18f) verbundenen Anschluss (19) für eine Reinigungsmittelzuleitung (19') aufweist,
**dadurch gekennzeichnet, dass**
zwischen dem Anschluss (19) der Reinigungsmittelzuleitung (19') und den Anschlussgegenstücken (18a - 18f) Rückschlagventile (17a - 17f) angeordnet sind.

2. Vorrichtung nach Anspruch 1, bei der die Pumpen (12a - 12f) als Schlauchpumpen ausgebildet sind.

3. Vorrichtung nach einem der vorangehenden Ansprüche, bei der zumindest ein Teil der Anschlussstücke (40) als selbstschließende Schnellverschlusskupplungen ausgeführt sind.

4. Vorrichtung nach einem der vorangehenden Ansprüche, welche geeignet ist mit Aromastoffbehältern (15a - 15f) betrieben zu werden, die als Flaschen mit einem Flaschenhals ausgebildet sind, indem je Aromastoffbehälter (15a - 15f) ein in den Flaschenhals einführbarer Verschlussstopfen (41) vorgesehen ist, der an seinem oben Ende ein Anschlussgegenstück (42) für die zugehörige Ansaugleitung (14a - 14f) trägt und eine durch den Verschlussstopfen (41) mit dem Anschlussgegenstück (40) verbundene, in die Flasche ragende Schlauch- oder Rohrleitung aufweist.

5. Anordnung mit einer Vorrichtung nach einem der vorangehenden Ansprüche und einer über die Reinigungsmittelzuleitung (19') an den Reinigungsmittelanschluss (19) der Anschlusseinrichtung (16) angeschlossenen Reinigungsvorrichtung (20), welche die Vorrichtung (10) zur Durchführung eines Reinigungsvorgangs mit Reinigungsflüssigkeit versorgt.

6. Anordnung nach Anspruch 5, bei der die Reinigungsvorrichtung (20) einen Reinigungsmittelvorratsbehälter (23) mit Reinigerkonzentrat, einen Mischbehälter (22) zum Anmischen einer Reinigungsflüssigkeit aus Reinigerkonzentrat und Wasser, einen über ein Absperrventil (29) mit dem Mischbehälter (22) verbindbaren Wasserzulauf, eine Dosierpumpe (24) zum Fördern von Reinigerkonzentrat aus dem Reinigungsmittelvorratsbehälter (23) in den Mischbehälter (22), sowie einen mit dem Mischbehälter (22) verbundenen Auslassanschluss (21) aufweist, an den die Reinigungsmittelzuleitung (19') angeschlossen ist.

7. Verfahren zum Betrieb einer Vorrichtung (10) zur Ausgabe von flüssigen Aromazusätzen bei einer Zubereitung von aromatisierten Getränken, insbesondere von kaffee-, tee- und/oder milchbasierten Getränken, bei dem mehrere Aromastoffbehälter (15a - 15f) für verschiedene Aromazusätze vorgesehen sind und jeder der Aromastoffbehälter (15a - 15f) über eine flexible Ansaugleitung (14a - 14f) mit einer dem jeweiligen Aromastoffbehälter (15a - 15f) zugeordneten Pumpen (12a - 12f) verbunden wird und bei dem durch Ansteuern einer der Pumpen (12a - 12f) der zugehörige Aromazusatz über eine Aromastoffleitung (13) zu einer angeschlossenen Getränkeausgabevorrichtung gefördert wird,
wobei die Ansaugleitungen (14a - 14f) an ihrem mit dem Aromastoffbehälter (15a - 15f) zu verbindenden Ende jeweils ein Anschlussstück (40) aufweisen und zur Durchführung einer Reinigung die Ansaugleitungen (14a - 14f) von ihren jeweiligen Aromastoffbehältern (15a - 15f) abgenommen und über eine Anschlusseinrichtung (16), an der entsprechende Anschlussgegenstücke (18a - 18f) für die Ansaugleitungen (14a - 14f) vorgesehen sind, mit einer Reinigungsmittelzuleitung (19') verbunden werden,
**dadurch gekennzeichnet, dass**
zwischen der Reinigungsmittelzuleitung (19') und den Anschlussgegenstücken (18a - 18f) Rückschlagventile (17a - 17f) angeordnet sind.

8. Verfahren nach Anspruch 7, bei dem vor Durchführung einer Reinigung in den Leitungen (13, 14a - 14f) befindliches Aromafluid in den jeweiligen Aromastoffbehälter (15a - 15f) zurückgefördert wird, indem die betreffende Pumpe (12a - 12f) in entgegengesetzter Pumprichtung betrieben wird.

## Claims

1. Apparatus (10) for dispensing fluid flavouring additives for preparation of flavoured beverages, especially coffee-, tea- and/or milk-based beverages, having a receiving space (11) for receiving a plurality of flavouring containers (15a - 15f), having a plurality of pumps (12a - 12f), each assigned to one of the flavouring containers (15a - 15f), which pumps are each connectible to the relevant flavouring container (15a - 15f) via a flexible suction line (14a - 14f), and having at least one flavouring line (13) leading from the pumps (12a - 12f) to a beverage dispensing apparatus,
wherein the suction lines (14a - 14f) each have a connector (40) at their end to be connected to the flavouring container (15a - 15f), and the apparatus (10) comprises a connection device (16) which has corresponding counterpart connectors (18a - 18f) for the suction lines (14a - 14f), to which the suction lines (14a - 14f) can be connected instead of to the respective flavouring containers (15a - 15f) in order to perform a cleaning operation, and the connection device (16) also has a connection (19) for a cleaning agent supply line (19'), which connection is connected to the counterpart connectors (18a - 18f),
**characterised in that**
non-return valves (17a - 17f) are arranged between the connection (19) of the cleaning agent supply line (19') and the counterpart connectors (18a - 18f).

2. Apparatus according to claim 1, wherein the pumps (12a - 12f) are configured as peristaltic pumps.

3. Apparatus according to either one of the preceding claims, wherein at least some of the connectors (40) are configured as self-closing quick-release couplings.

4. Apparatus according to any one of the preceding claims, which is suitable for being operated with flavouring containers (15a - 15f) configured as bottles having a bottle neck, this being achieved by providing for each flavouring container (15a - 15f) a closure stopper (41) that is insertable into the bottle neck, which closure stopper carries a counterpart connector (42) for the associated suction line (14a - 14f) at its upper end and has a hose or pipe that extends into the bottle and is connected to the counterpart connector (40) through the closure stopper (41).

5. Arrangement having an apparatus according to any one of the preceding claims and a cleaning apparatus (20) connected to the cleaning agent connection (19) of the connection device (16) via the cleaning agent supply line (19'), which cleaning apparatus supplies the apparatus (10) with cleaning fluid in order to perform a cleaning operation.

6. Arrangement according to claim 5, wherein the cleaning device (20) has a cleaning agent supply container (23) containing cleaner concentrate, a mixing container (22) for mixing a cleaning fluid from cleaner concentrate and water, a water inlet which is connectible to the mixing container (22) via a shut-off valve (29), a metering pump (24) for conveying cleaner concentrate from the cleaning agent supply container (23) to the mixing container (22), and an outlet connection (21) connected to the mixing container (22), to which outlet connection the cleaning agent supply line (19') is connected.

7. Method of operating an apparatus (10) for dispensing fluid flavouring additives for preparation of flavoured beverages, especially coffee-, tea- and/or milk-based beverages, wherein a plurality of flavouring containers (15a - 15f) for different flavouring additives are provided and each of the flavouring containers (15a - 15f) is connected via a flexible suction line (14a - 14f) to a pump (12a - 12f) associated with the respective flavouring container (15a - 15f) and wherein by actuation of one of the pumps (12a - 12f) the associated flavouring additive is conveyed via a flavouring line (13) to a connected beverage dispensing apparatus,
wherein the suction lines (14a - 14f) each have a connector (40) at their end to be connected to the flavouring container (15a - 15f) and in order to perform a cleaning operation the suction lines (14a - 14f) are removed from their respective flavouring containers (15a - 15f) and are connected to a cleaning agent supply line (19') via a connection device (16) on which corresponding counterpart connectors (18a - 18f) for the suction lines (14a - 14f) are provided,
**characterised in that**
non-return valves (17a - 17f) are arranged between the cleaning agent supply line (19') and the counterpart connectors (18a - 18f).

8. Method according to claim 7, wherein, before a cleaning operation is performed, flavouring fluid located in the lines (13, 14a - 14f) is returned to the respective flavouring container (15a - 15f) by operation of the relevant pump (12a - 12f) in the opposite pumping direction.

## Revendications

1. Dispositif (10) pour la distribution d'additifs aromatisants liquides lors d'une préparation de boissons aromatisées, en particulier de boissons à base de café, de thé et/ou de lait, comprenant un espace de réception (11) pour recevoir plusieurs récipients de substances aromatisantes (15a-15f), comprenant plusieurs pompes (12a-12f) associées respectivement à l'un des récipients de substances aromatisantes (15a-15f), qui sont aptes à être reliées respectivement par une conduite d'aspiration flexible (14a-14f) au récipient de substance aromatisante (15a-15f) concerné, et comprenant au moins une conduite de substance aromatisante (13) menant des pompes (12-12f) à un dispositif de distribution de boisson,
dans lequel les conduites d'aspiration (14a-14f) comportent à leur extrémité à relier à un récipient de substance aromatisante (15a-15f) une pièce de raccordement (40) et le dispositif (10) comprend un dispositif de raccordement (16) qui a des pièces de raccordement opposées correspondantes (18a-18f) pour les conduites d'aspiration (14a-14f) auxquelles les conduites d'aspiration (14a-14f) peuvent être reliées, à la place du récipient de substance aromatisante (15a-15f) respectif, pour la réalisation d'un nettoyage, et le dispositif de raccordement (16) comporte en outre un raccord (19) relié aux pièces de raccordement opposées (18a-18f), pour une conduite d'amenée d'agent de nettoyage (19'),
**caractérisé en ce qu'**entre le raccord (19) de la conduite d'amenée d'agent de nettoyage (19') et les pièces de raccordement opposées (18a-18f) sont disposées des vannes antiretour (17a-17f).

2. Dispositif selon la revendication 1, dans lequel les pompes (12a-12f) sont agencées en tant que pompes tubulaires.

3. Dispositif selon l'une des revendications précédentes, dans lequel une partie au moins des pièces de raccordement (40) sont agencées en tant que raccords rapides à fermeture automatique.

4. Dispositif selon l'une des revendications précédentes, qui est approprié pour fonctionner avec des récipients de substances aromatisantes (15a-15f) qui sont agencés en tant que bouteilles comprenant un goulot, grâce au fait qu'il est prévu pour chaque récipient de substance aromatisante (15a-15f) un bouchon de fermeture (41) apte à être introduit dans le goulot, qui porte à son extrémité supérieure une pièce de raccordement opposée (42) pour la conduite d'aspiration (14a-14f) et comporte une conduite à tuyau ou à tube reliée par le bouchon de fermeture (41) à la pièce de raccordement opposée (40) et dépassant dans la bouteille.

5. Installation comprenant un dispositif selon l'une des revendications précédentes et un dispositif de nettoyage (20) qui est raccordé par la conduite d'amenée d'agent nettoyage (19') au raccordement d'agent de nettoyage (19) du dispositif de raccordement (16) et qui alimente le dispositif (10) en liquide de nettoyage pour la réalisation d'une opération de nettoyage.

6. Installation selon la revendication 5, dans laquelle le dispositif de nettoyage (20) comporte un réservoir d'agent de nettoyage (23) comprenant du concentré de nettoyant, un récipient de mélange (22) pour le mélange d'un liquide de nettoyage formé de concentré de nettoyant et d'eau, une amenée d'eau apte à être reliée par une vanne d'arrêt (29) au récipient de mélange (22), une pompe de dosage (24) pour refouler du concentré de nettoyant du réservoir d'agent de nettoyage (23) dans le récipient de mélange (22), ainsi qu'un raccord de sortie (21), relié au récipient de mélange (22), auquel est raccordée la conduite d'amenée d'agent de nettoyage (19').

7. Procédé pour le fonctionnement d'un dispositif (10) pour la distribution d'additifs aromatisants liquides lors d'une préparation de boissons aromatisées, en particulier de boissons à base de café, de thé et/ou de lait, selon lequel plusieurs récipients de substances aromatisantes (15a-15f) pour différents additifs aromatisants sont prévus et chacun des récipients de substances aromatisantes (15a-15f) est relié par une conduite d'aspiration flexible (14a-14f) à une pompe (12a-12f) associée au récipient de substance aromatisante (15a-15f) respectif et selon lequel par la commande de l'une des pompes (12a-12f) l'additif aromatisant correspondant est refoulé par une conduite de substance aromatisante (13) jusqu'à un dispositif de distribution de boisson raccordé,
dans lequel les conduites d'aspiration (14a-14f) comportent respectivement à leur extrémité à relier au récipient de substance aromatisante (15a-15f) une pièce de raccordement (40), et pour la réalisation d'un nettoyage les conduites d'aspiration (14a-14f) sont retirées de leurs récipients de substances aromatisantes (15a-15f) respectifs et sont reliées par un dispositif de raccordement (16) sur lequel sont prévues des pièces de raccordement opposées correspondantes (18a-18f) pour les conduites d'aspiration (14a-14f), à une conduite d'amenée d'agent de nettoyage (19'),
**caractérisé en ce qu'**entre la conduite d'amenée d'agent de nettoyage (19') et les pièces de raccordement opposées (18a-18f) sont disposées des vannes antiretour (17a-17f).

8. Procédé selon la revendication 7, selon lequel, avant la réalisation d'un nettoyage, on ramène le fluide aromatisant se trouvant dans les conduites (13, 14a-14f) dans le récipient de substance aromatisante (15a-15f) respectif en faisant fonctionner la pompe (12a-12f) concernée dans la direction de pompe inverse.
